# EUROPEAN PATENT APPLICATION

(11) **EP 4 803 384 A1**
(43) Date of publication of application: **09.09.2026**
(21) Application number: 25162263.5
(22) Date of filing: 07.03.2025
(51) Int. Cl.: B60T 1/06, F16D 55/226, F16D 65/00, F16D 65/18, F16D 65/847, F16D 55/00

(54) **PARTICLE GUIDING ARRANGEMENT FOR AN ENCAPSULATED DISC BRAKE OF A VEHICLE, IN PARTICULAR UTILITY VEHICLE, ENCAPSULATED DISC BRAKE, BRAKING SYSTEM, AND VEHICLE**

(71) Applicant: ZF CV Systems Europe BV, 1170 Brüssel (BE)
(72) Inventor: STRZALA, Wieslaw, 46-220 Byczyna (PL)
(74) Representative: Ohlendorf, Henrike

(57) **Abstract**

Particle guiding arrangement (100) for an encapsulated disc brake (250) of a vehicle (200a), in particular utility vehicle (200b); wherein the particle guiding arrangement (100) is adapted to be arranged on a brake carrier (260) of the disc brake (250) in a run-out side (261) of the brake carrier (260) and/or of a brake caliper (270); the particle guiding arrangement (100) comprises an opening (110) for connecting a suction system (206) to the opening (110); the particle guiding arrangement (100) comprises an emission directing member (130) for guiding particles and/or air from the run-out side (261) to the opening (110).

## Description

The disclosure relates to a particle guiding arrangement for an encapsulated disc brake of a vehicle, in particular utility vehicle. The disclosure also relates to an encapsulated disc brake for a vehicle, in particular utility vehicle, to a braking system for a vehicle, in particular utility vehicle, and to a vehicle, in particular utility vehicle.

Disc brakes are known in the prior art. Therein, such a disc brake typically comprises a pair of brake pads and a brake rotor with a ring-shaped braking surface that is adapted to rotate relative to the pair of brake pads. The brake pads may be brought into interaction with the ring-shaped braking surface to produce a braking moment and/or braking force. The interaction between the brake pads and the braking surface implies that brake particles may be released from the brake pads and/or the braking surface by an abrasive friction between the brake pads and the braking surface. These particles are referred to as brake dust.

It is known from the prior art that brake dust and/or brake particles may be collected so that an emission of the brake particles in an environment may be reduced and/or minimized. Brake particles may be collected and/or caught in an active way, e.g., by so-called active suction system. Such an active suction system requires a source of energy to run to catch the brake particles.

Conventionally, the brake rotor of a disc brake may be disc-shaped.

DE102006051972 A1 relates to a brake dust collector for a disc brake comprising a brake disc and a brake caliper clasping the latter. The brake dust collector includes a housing designed to clasp a portion of the brake disc directly adjoining the brake caliper in the main direction of rotation of the brake disc. Provided arranged in the housing is a brake dust retainer comprising a plurality of brake dust intake ports.

FR 1 341 744 discloses a disc brake having at least one brake caliper embracing a rotating brake disc and brake shoes arranged on both sides of the brake disc and controlled mechanically, hydraulically or electrically, are mounted in such a way that the brake shoes can be moved in an axial direction.

It is also known that the brake rotor has a more complex geometry, i.e., a non-ring-shaped shape. However, the brake rotor may comprise a braking surface that may be ring-shaped and the mechanisms to bring the brake pads into interaction with the braking surface may be similar to mechanisms of disc brakes with disc-shaped brake rotors. Thus, also brakes with rotors with a more complex geometry may be referred to as disc brake.

DE 3446743 discloses a disc brake and a method for its assembly.

DE 39 31 868 A1 discloses a wheel-brake arrangement is for disc brakes. The ring-shaped braking disc is formed as one piece with a brake disc carrier. The wheel rim and wheel disc are made as separate parts and in the transition area where the wheel disc merges into the rim, the wheel disc, wheel rim and brake disc carrier are all centered and joined together by means of a screw.

Such a disc brake with a brake rotor with a more complex geometry may be used to further reduce brake particles to be emitted into an environment. By limiting emission from brakes, an environmental transportation footprint may be lowered.

For example, German patent application DE 10 2024 121 821.5 describes a brake disc for a vehicle, comprising a friction ring which is supported on a brake disc carrier, wherein the friction ring and the brake disc carrier are interconnected at an outer circumference and the brake disc carrier covers the friction ring unilaterally, wherein a encapsulation element for receiving brake particle covers the friction ring.

However, guiding brake particles within a volume that is created by, e.g., the encapsulation element of DE 10 2024 121 821.5, may be crucial for directing the particles, e.g., to an active suction system and/or to prevent brake particles from staying inside brake and eventually escaping through gaps between the encapsulation element and other components of the disc brake.

In the light of the prior art, it is an object of the disclosure to provide a contribution to the prior art. In particular, an object of the disclosure is to provide an encapsulated disc brake with improved requirements of the energy consumption of an active suction system and/or with a reduced uncontrolled emission of brake particles.

The object is solved by the subject-matter according to independent claim 1 and according to the remaining independent claims. Dependent claims relate to preferred embodiments.

According to an aspect of the present disclosure, a particle guiding arrangement for an encapsulated disc brake of a vehicle, in particular utility vehicle, is provided; wherein the particle guiding arrangement is adapted to be arranged on a brake carrier of the disc brake in a run-out side of the brake carrier and/or of a brake caliper; the particle guiding arrangement comprises an opening for connecting a suction system to the opening; and the particle guiding arrangement comprises an emission directing member for guiding particles and/or air from the run-out side to the opening.

It is realized that the particle guiding arrangement may be used to guide the brake particles to the opening so that an active suction system that is connected via the opening may work with improved efficiency, operate under lower underpressure and/or achieve reduced uncontrolled brake particle emissions. The brake particles are guided by the particle guiding arrangement from the run-our side, also called outboard rotor side, directly to the opening to being caught by an active suction system which increases the efficiency of the active suction system.

The particle guiding arrangement provides the emission directing member as an air directing means for the encapsulated disc brake which guides brake particles from the outboard rotor side directly to an active suction system, i.e., the emission directing member is adapted to direct contaminated air directly to the opening that is configured as an active suction system duct.

The particle guiding arrangement is, in the mounted state, arranged on the run-out rotor side, i.e., opposite to a rotor run-in side, and comprises the opening as an active suction system duct and emissions directing member. In the mounted state, the emissions directing member is arranged within an encapsulated space and is adapted to direct emissions from outboard side of the brake rotor directly to the active suction system duct. Thus, an amount of particle uncontrolledly moving within the brake may limited which means that an amount of particle which could potentially escape through gaps may be lower. Thus, the efficiency of the system may be increased. Additionally, as particles are directed to the active suction system duct immediately after being created at an interface between the brake pads and the braking surface, a connected active suction system may operate with lower underpressure which may lower energy consumption and noise.

Optionally the particle guiding arrangement comprises a radially extended cover section to at least partially encapsulate a brake rotor, the brake caliper and/or brake pads of the disc brake; and the opening is arranged in the cover section. In other words, the opening is optionally arranged in a section of the encapsulated disc brake that achieves, by the cover section, an encapsulation of a volume within which brake particles are created. The opening may thus provide a well-defined path at which the brake particles may travel to be caught by an active suction system.

Optionally, the particle guiding arrangement comprises a radially extended cover to at least partially encapsulate a brake rotor, the brake caliper and/or brake pads of the disc brake; the cover comprises the opening; and the cover is adapted to be mounted to the brake carrier. The cover may constitute the cover section that achieves the encapsulation of the volume within which brake particles are created. Arranging the cover and thus the opening to the brake carrier achieves that the opening may be reliably arranged at the run-out side of the brake carrier and/or the brake caliper.

Optionally, the emission directing member and the cover are mounted to each other. The emission directing member may be mounted to cover by fixation members, e.g. screws. Alternatively or additionally, emission directing member may be mounted to brake carrier.

Optionally, the emission directing member is made of sheet metal. Sheet metal may provide a corrosion resistant, thermally resistant and thermally conductive emission directing member. Furthermore, the shape and/or geometry of the emission directing member may be effectively configured, e.g., by punching, rolling, cutting, stamping, deep-drawing and/or bending.

Optionally, the emission directing member is formed in one piece. This may achieve an effective assembly of the particle guiding arrangement.

Optionally, the disc brake comprises a vehicle-sided end; and the opening is arranged at the vehicle-sided end. This may enable an effective connection with a suction system.

Optionally, the disc brake comprises a brake rotor with a ring-shaped braking surface on a vehicle-sided end; and the emission directing member is arranged to face the braking surface. This may lead to a direct directing of brake particles.

Optionally, the emission directing member comprises a plate-shaped deflection member and at least one curved functional deflection member. The differentiated shape of the emission directing member may achieve a balance between functionality and a cost-effective manufacturability of the emission directing member.

Optionally, the emission directing member comprises a plate-shaped deflection member; and the plate-shaped deflection member is adapted to guide brake particle and/or air from a vehicle-distal end of the disc brake to a vehicle-sided end of the disc brake. I.e., the plate-shaped deflection member may be arranged, in an axial direction and towards the opening, to be inclined in a rotation direction, to direct brake particles directly to the opening.

Optionally, the emission directing member comprises a first curved functional deflection member; and the first curved functional deflection member is adapted to cover a section of an outer circumference of a brake rotor of the disc brake. In other words, the first curved functional deflection member may be adapted to catch brake particles which move, due to a centrifugal force, radially outwardly towards the first curved functional deflection member and to direct air with brake particles to the opening.

According to an aspect of the disclosure, an encapsulated disc brake for a vehicle, in particular utility vehicle, is provided; wherein the disc brake comprises a brake carrier; the disc brake comprises a brake caliper arranged on the brake carrier; the disc brake comprises a brake rotor adapted to rotate relative to the brake caliper; the disc brake comprises brake pads arranged on the brake caliper and adapted to be axially moved; and the disc brake comprises the particle guiding arrangement according to the disclosure.

Optionally, the encapsulated disc brake and/or the particle guiding arrangement of the disc brake comprises one or more optional features to achieve a technical effect corresponding therewith. Optionally, the brake rotor of the encapsulated disc brake, the upper cover and/or the lower cover may essentially, i.e., entirely without considering the particle guiding arrangement, be configured as described in DE 10 2024 121 821.5.

Optionally, the disc brake comprises an upper brake cover and a lower brake cover; and the particle guiding arrangement is arranged at the lower brake cover. Therein, it is realized that the upper brake cover is mounted between the brake rotor and the brake caliper and, thus, constructive space may be limited. Arranging the particle guiding arrangement at the lower brake cover may make use of sufficient constructive space and provides more effectively to arrange the particle guiding arrangement at the run-out side of the brake caliper and/or brake carrier.

According to an aspect of the disclosure, a braking system is provided, comprising a particle guiding arrangement according to the disclosure and/or an encapsulated disc brake according to the disclosure.

Optionally, the braking system, the encapsulated disc brake and/or the particle guiding arrangement of the disc brake comprises one or more optional features to achieve a technical effect corresponding therewith.

Optionally, the braking system comprises a suction system; and the suction system is pneumatically connected to the opening. This achieves that brake particles that are guided by the particle guiding arrangement to the opening may effectively and directly be caught by the active suction system.

According to an aspect of the disclosure, a vehicle, in particular utility vehicle, is provided, comprising a braking system according to the disclosure, an encapsulated disc brake according to the disclosure and/or a particle guiding arrangement according to the disclosure.

Optionally, vehicle, in particular utility vehicle, the braking system, the encapsulated disc brake and/or the particle guiding arrangement of the disc brake comprises one or more optional features to achieve a technical effect corresponding therewith.

Further advantages and technical features and their technical effects are disclosed in the figures and the description thereof.

The figures show preferred embodiments as follows:
Fig. 1 a schematic of a vehicle, in particular utility vehicle, according to an embodiment of the disclosure;
Fig. 2 a schematic of a perspective view of a disc brake according to an embodiment of the disclosure;
Fig. 3 a schematic of a perspective view of a disc brake according to an embodiment of the disclosure;
Fig. 4 a schematic of a sectional view of a disc brake according to an embodiment of the disclosure;
Fig. 5 a detail of a schematic of sectional view of a disc brake according to an embodiment of the disclosure;
Fig. 6 a detail of a schematic of sectional view of a disc brake according to an embodiment of the disclosure; and
Fig. 7 a perspective view of a emission directing member of a particle guiding arrangement according to an embodiment of the disclosure.

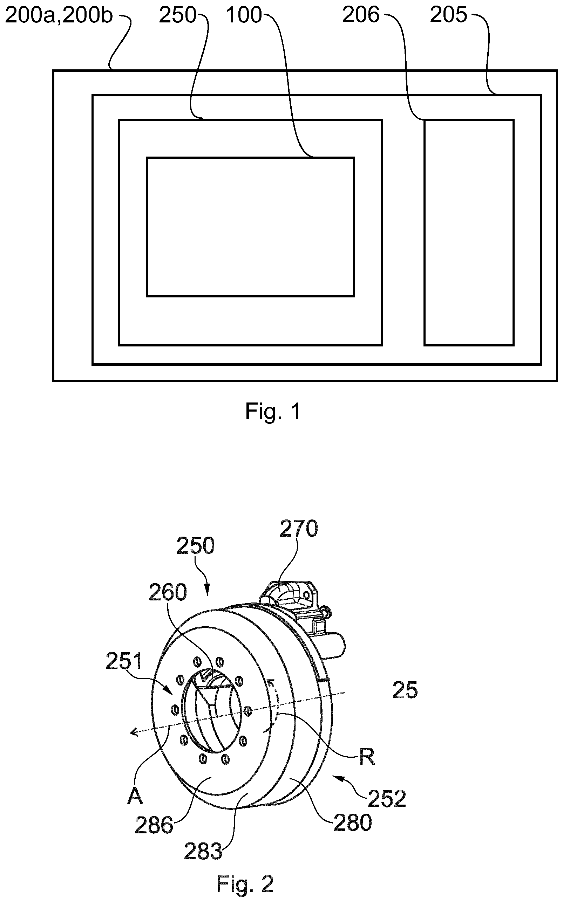

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck and/or towing vehicle of a vehicle combination, a bus and/or a passenger car.

The vehicle 200a, 200b comprises a braking system 205. The braking system 205 is adapted to be actuated by a driver of the vehicle 200a, 200b and/or by an autonomous driving function of the vehicle 200a, 200b to apply and/or release a braking torque. The braking system 205 may be a pneumatic braking system 205, a electronic braking system 205, a hydraulic braking system 205 and/or electronically assisted.

The braking system 205 comprises an encapsulated disc brake 250. The disc brake 250 comprises a particle guiding arrangement 100. Further features of the disc brake 250 and the particle guiding arrangement 100 are described under reference to Figures 2 to 7.

The braking system 205 of Figure 1 comprises a suction system 206. The suction system 206 is pneumatically connected to an opening 110 of the particle guiding arrangement 100. The suction system 206 is adapted to catch brake particles of the disc brake 250 to collect and/or dispose of the brake particles and/or to depollute the disc brake 250.

Figure 2 shows a schematic of a perspective view of a disc brake 250 according to an embodiment of the disclosure. The disc brake 250 of Figure 2 is an encapsulated disc brake 250 for a vehicle 200a, in particular utility vehicle 200b. Such a disc brake 250 and such a vehicle 200a, 200b is described with reference to Figure 1. Figure 2 is described under reference to Figure 1.

The disc brake 250 is essentially configured as described in DE 10 2024 121 821.5. The disc brake 250 comprises a brake carrier 260. The brake carrier 260 is mounted to a non-rotating part of the vehicle 200a, 200b.

The disc brake 250 comprises a brake caliper 270 arranged on the brake carrier 260. The brake caliper 270 may be a so-called floating brake caliper 270 and may be adapted to move upon an actuation of the disc brake 250 axially, i.e., parallel to an axis A. Alternatively, the brake caliper 270 may be fixed.

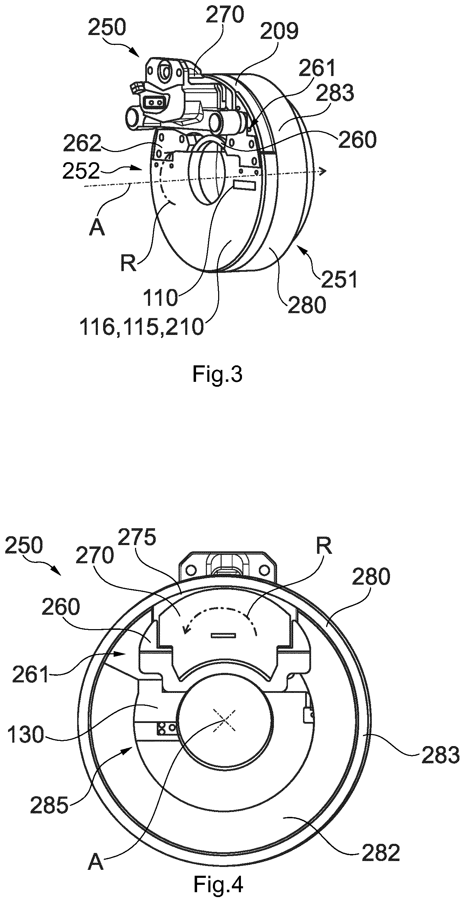

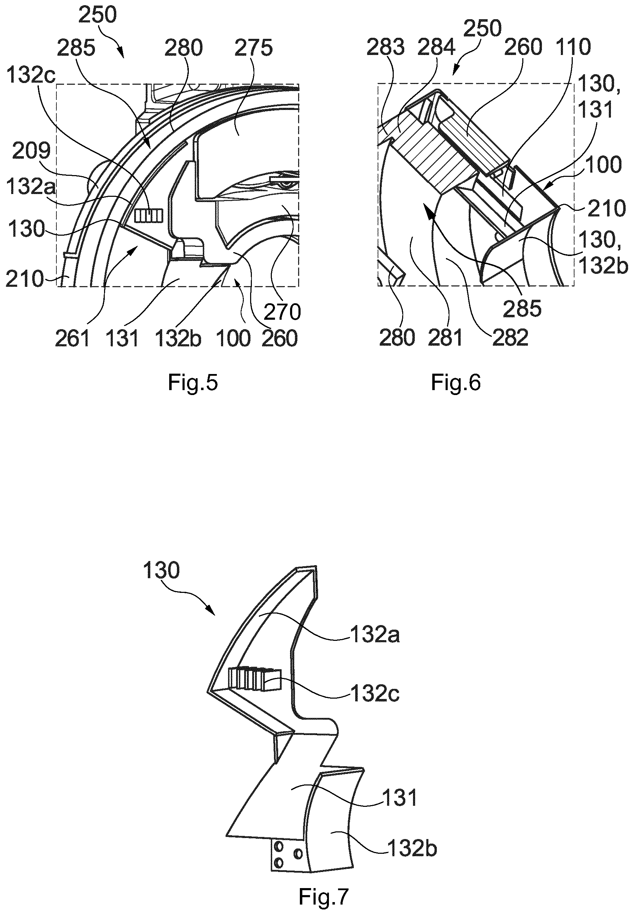

The disc brake 250 comprises a brake rotor 280 adapted to rotate relative to the brake caliper 270. The rotation of the brake rotor 280 defines a rotation direction R (see Figures 3 and 4), wherein the rotation direction R relates to a rotational motion of the brake rotor 280 when the vehicle 200a, 200b drives in a forward direction. The axis A is the axis of rotation. The brake rotor 280 comprising a friction ring 282 (see Figure 6) which is supported on a brake disc carrier 283. The friction ring 282 and the brake disc carrier 283 are interconnected at an outer circumference 284. The brake disc carrier 283 covers the friction ring 282 unilaterally. The brake rotor 280 is adapted to partially provide an encapsulated volume 285.

The disc brake 250 comprises brake pads 275 arranged on the brake caliper 270 and adapted to be axially moved. By the axial movement of the brake pads 275, the brake pads 275 are adapted to be brought into interaction with the brake rotor 280, in particular with the friction ring 282. The friction ring 282 comprises a ring-shaped braking surface 281. The brake pads 275 and the braking surface 281 are adapted to interact with each other to achieve a braking force.

The disc brake 250 comprises an upper brake cover 209 and a lower brake cover 210. Each of the upper brake cover 209 and the lower brake cover 210 are made of sheet metal. The upper brake cover 209 is mounted to the brake carrier 260. The upper brake cover 209 is arranged, along the axis A, between the brake rotor 280 and the brake caliper 270. The upper brake cover 209 is, in the mounted state, arrange above the lower brake cover 210. The lower brake cover 210 is mounted to the brake carrier 260 and/or the upper brake cover 209.

The encapsulated volume 285 is encapsulated by the brake rotor 280, the lower brake cover 210, the upper brake cover 209, the brake caliper 270 and the brake carrier 260.

The brake pads 275 are arranged within the encapsulated volume 285. Thus, brake particles may be created within the encapsulated volume 285.

The arrangement of the disc brake 250 defines a vehicle-distal end 251 and a vehicle-sided end 252. The vehicle-sided end 252 is located, along the axis A, at mount sections 262 of the brake carrier 260 (see Figure 3). The mount sections 262 of the brake carrier 260 is mounted to a non-rotating component of the vehicle 200a, 200b (not shown). The vehicle-distal end 251 are, along the axis A, distantly arranged from each other vehicle-sided end 252. The vehicle-distal end 251 is located at an axial end 286 of the brake rotor 280. The rotor 280 is adapted to be connected to a rotatable hub and/or wheel at the axial end.

The disc brake 250 comprises the particle guiding arrangement 100 (not shown in Figure 2). Further features of the disc brake 250 and of the particle guiding arrangement 100 are described with reference to Figures 3 to 7.

Figure 3 shows a schematic of a perspective view of a disc brake 250 according to an embodiment of the disclosure. The disc brake 250 of Figure 3 is the disc brake 250 of Figure 2. Figure 3 is described under reference to Figures 1 and 2.

Figure 3 further illustrates a run-out side 261 of the disc brake 250. The run-out side 261 is arranged, in the rotation direction R, behind the brake carrier 260 and/or behind the brake carrier 270.

Figure 4 shows a schematic of a sectional view of a disc brake 250 according to an embodiment of the disclosure. The disc brake 250 of Figure 4 is the disc brake 250 of Figures 2 and 3. Figure 4 is described under reference to Figures 1 to 3.

The axis A points out of the drawing plane of Figure 4.

Figure 4 illustrates that the brakes rotor 280 encapsulated the encapsulated volume 285 circumferentially and delimits the encapsulated volume 285 radially.

Figure 5 a detail of a schematic of sectional view of a disc brake 250 according to an embodiment of the disclosure. The disc brake 250 of Figure 5 is the disc brake 250 of Figures 2 to 4. Figure 5 is described under reference to Figures 1 to 4.

The disc brake 250 comprises the particle guiding arrangement 100.

The particle guiding arrangement 100 is arranged on the brake carrier 260 of the disc brake 250 in the run-out side 261 of the brake carrier 260 and/or of the brake caliper 270. In particular, the particle guiding arrangement 100 is arranged at the lower brake cover 210. The lower brake cover 210 is directly and/or via the upper brake cover 209 mounted to the brake carrier 260. Thus, the particle guiding arrangement 100 is arranged and mounted, via the lower brake cover 210 and/or the upper brake cover 209, to the brake carrier 260. Alternatively (not shown), the particle guiding arrangement 100 may be directly arranged on the brake carrier 260.

The particle guiding arrangement 100 comprises an opening 110 (see Figures 3 and 6) for connecting a suction system 206 to the opening 110. In particular, the particle guiding arrangement 100 comprises a radially extended cover section 116 (see Figure 3) to at least partially encapsulate the brake rotor 280, in particular the friction ring 282 unilaterally, the brake caliper 270 and/or brake pads 275 of the disc brake 250. The opening 110 is arranged in the cover section 116. The cover section 116 is provided by a radially extended cover 115 to at least partially encapsulate a brake rotor 280, the brake caliper 270 and/or brake pads 275 of the disc brake 250. The cover 115 comprises the opening 110. The cover 115 is adapted to be mounted to the brake carrier 260. The cover 115 is the lower cover 210 which may be directly and/or via the upper cover 209 indirectly mounted to the brake carrier 260. Alternatively (not shown), the cover 115 may be the upper cover 209, i.e., the opening 110 may be arranged at the upper cover 209.

The opening 110 is arranged at the vehicle-sided end 252. This achieves that the suction system 206 may effectively be connected to the opening 110.

The particle guiding arrangement 100 comprises an emission directing member 130 for guiding particles and/or air from the run-out side 261 to the opening 110. The emission directing member 130 is further detailed with reference to Figure 7.

The emission directing member 130 and the cover 115 are mounted to each other (see Figures 4 and 6). The emission directing member 130 is mounted, via screws, to the cover 115, i.e., to the lower cover 210. The lower cover 210 comprises a plurality of holes and the emission directing member 130 comprises a corresponding plurality of through holes by which the emission directing member 130 may be mounted to the lower cover 210. Alternatively (not shown), the emission directing member 130 may be mounted directly to the brake carrier 260.

Figure 6 a detail of a schematic of sectional view of a disc brake 250 according to an embodiment of the disclosure. The disc brake 250 of Figure 6 is the disc brake 250 of Figures 2 to 5. Figure 6 is described under reference to Figures 1 to 5.

The disc brake 250 comprises a brake rotor 280 with a ring-shaped braking surface 281 on the vehicle-sided end 252. The emission directing member 130 is arranged to face the braking surface 281.

Figure 7 shows a perspective view of a emission directing member 130 of a particle guiding arrangement 100 according to an embodiment of the disclosure. The emission directing member 130 of Figure 7 is the emission directing member 130 of Figures 5 and 6. Figure 7 is described under reference to Figures 1 to 6.

The emission directing member 130 is made of sheet metal. The emission directing member 130 is formed in one piece.

The emission directing member 130 comprises a plate-shaped deflection member 131 and two functional deflection members 132a, 132b. A first curved functional deflection member 132a is arranged to delimit the encapsulated volume 285 radially outwardly. I.e., the second curved functional deflection member 132b is shaped to align with the outer circumference 284 of the brake rotor 280. The first curved functional deflection member 132a is adapted to cover a section of an outer circumference 284 of a brake rotor 280 of the disc brake 250.

A second curved functional member 132b is adapted to increase the stiffness of the emission directing member 130. This may prevent that the emission directing member 130 may easily bend close to a connection with the lower brake cover 210. Further the second curved functional member 132b may delimit the encapsulated volume 285 radially inwardly.

The emission directing member 130 comprises a third functional deflection member 132c. The third functional deflection member 132c comprises a plurality of distantly arranged fins and/or ribs. The third functional deflection member 132c is adapted to direct particles from a circumferential trajectory radially inwardly to the opening 110.

The plate-shaped deflection member 131 is adapted to guide brake particles and/or air from the vehicle-distal end 251 of the disc brake 250 to the vehicle-sided end 252 of the disc brake 250.

The plate-shaped deflection member 131 is, in the mounted state, arranged in a radial direction, between the two functional deflection members 132a, 132b.

### List of reference signs (part of the description)

- 100: particle guiding arrangement
- 110: opening
- 115: cover
- 116: cover section
- 130: emission directing member
- 131: plate-shaped deflection member
- 132a: first curved functional deflection member
- 132b: second curved functional member
- 132c: third functional deflection member

- 200a: vehicle
- 200b: utility vehicle

- 205: braking system
- 206: suction system

- 209: upper brake cover
- 210: lower brake cover

- 250: disc brake
- 251: vehicle-distal end
- 252: vehicle-sided end
- 260: brake carrier
- 261: run-out side
- 262: mounting section
- 270: brake caliper
- 275: brake pad
- 280: brake rotor
- 281: braking surface
- 282: friction ring
- 283: brake disc carrier
- 284: outer circumference
- 285: encapsulated volume

- A: axis
- R: rotation direction

## Claims

1. Particle guiding arrangement (100) for an encapsulated disc brake (250) of a vehicle (200a), in particular utility vehicle (200b); wherein
- the particle guiding arrangement (100) is adapted to be arranged on a brake carrier (260) of the disc brake (250) in a run-out side (261) of the brake carrier (260) and/or of a brake caliper (270);
- the particle guiding arrangement (100) comprises an opening (110) for connecting a suction system (206) to the opening (110);
- the particle guiding arrangement (100) comprises an emission directing member (130) for guiding particles and/or air from the run-out side (261) to the opening (110).

2. Particle guiding arrangement (100) as claimed in claim 1, wherein
- the particle guiding arrangement (100) comprises a radially extended cover section (116) to at least partially encapsulate a brake rotor (280), the brake caliper (270) and/or brake pads (275) of the disc brake (250); and
- the opening (110) is arranged in the cover section (116).

3. Particle guiding arrangement (100) as claimed in claim 1 or 2, wherein
- the particle guiding arrangement (100) comprises a radially extended cover (115) to at least partially encapsulate a brake rotor (280), the brake caliper (270) and/or brake pads (275) of the disc brake (250);
- the cover (115) comprises the opening (110); and
- the cover (115) is adapted to be mounted to the brake carrier (260).

4. Particle guiding arrangement (100) as claimed in claim 3, wherein
- the emission directing member (130) and the cover (115) are mounted to each other.

5. Particle guiding arrangement (100) as claimed in any one of the preceding claims, wherein
- the emission directing member (130) is made of sheet metal; and/or
- the emission directing member (130) is formed in one piece.

6. Particle guiding arrangement (100) as claimed in any one of the preceding claims, wherein
- the disc brake (250) comprises a vehicle-sided end (252); and
- the opening (110) is arranged at the vehicle-sided end (252).

7. Particle guiding arrangement (100) as claimed in any one of the preceding claims, wherein
- the disc brake (250) comprises a brake rotor (280) with a ring-shaped braking surface (281) on a vehicle-sided end (252); and
- the emission directing member (130) is arranged to face the braking surface (281).

8. Particle guiding arrangement (100) as claimed in any one of the preceding claims, wherein
- the emission directing member (130) comprises a plate-shaped deflection member (131) and at least one curved functional deflection member (132a).

9. Particle guiding arrangement (100) as claimed in any one of the preceding claims, wherein
- the emission directing member (130) comprises a plate-shaped deflection member (131); and
- the plate-shaped deflection member (131) is adapted to guide brake particles and/or air from a vehicle-distal end (251) of the disc brake (250) to a vehicle-sided end (252) of the disc brake (250).

10. Particle guiding arrangement (100) as claimed in any one of the preceding claims, wherein
- the emission directing member (130) comprises a first curved functional deflection member (132a); and
- the first curved functional deflection member (132a) is adapted to cover a section of an outer circumference (284) of a brake rotor (280) of the disc brake (250).

11. Encapsulated disc brake (250) for a vehicle (200a), in particular utility vehicle (200b); wherein
- the disc brake (250) comprises a brake carrier (260);
- the disc brake (250) comprises a brake caliper (270) arranged on the brake carrier (260);
- the disc brake (250) comprises a brake rotor (280) adapted to rotate relative to the brake caliper (270);
- the disc brake (250) comprises brake pads (275) arranged on the brake caliper (270) and adapted to be axially moved; and
- the disc brake (250) comprises the particle guiding arrangement (100) as claimed in any one of the preceding claims.

12. Encapsulated disc brake (250) as claimed in claim 11, wherein
- the disc brake (250) comprises an upper brake cover (209) and a lower brake cover (210); and
- the particle guiding arrangement (100) is arranged at the lower brake cover (210).

13. Braking system (205), comprising a particle guiding arrangement (100) as claimed in any one of claims 1 to 10 and/or an encapsulated disc brake (250) as claimed in any of the claims 11 to 12.

14. Braking system (205) as claimed in claim 13, wherein the braking system (205) comprises a suction system (206); and the suction system (206) is pneumatically connected to the opening (110).

15. Vehicle (200a), in particular utility vehicle (200b), comprising a braking system (205) as claimed in claim 13 or 14, an encapsulated disc brake (250) as claimed in any of the claims 11 to 12 and/or a particle guiding arrangement (100) as claimed in any one of claims 1 to 10.
